(19) Europäisches Patentamt / European Patent Office / Office européen des brevets

(11) **EP 2 041 517 B1**

(12) **FASCICULE DE BREVET EUROPEEN**

(45) Date de publication et mention
de la délivrance du brevet:
**03.11.2010 Bulletin 2010/44**

(51) Int Cl.:
***G01C 23/00*** *(2006.01)*

(21) Numéro de dépôt: **07786821.4**

(86) Numéro de dépôt international:
**PCT/EP2007/056296**

(22) Date de dépôt: **25.06.2007**

(87) Numéro de publication internationale:
**WO 2008/000712 (03.01.2008 Gazette 2008/01)**

(54) **PROCEDE DE GESTION DE L'AFFICHAGE D'UN COMPTEUR TOURNANT**

VERFAHREN ZUM VERWALTEN DER ANZEIGE EINES DREHZÄHLERS

METHOD FOR MANAGING THE DISPLAY OF A ROTARY COUNTER

(84) Etats contractants désignés:
**DE FR GB**

(30) Priorité: **29.06.2006 FR 0605883**

(43) Date de publication de la demande:
**01.04.2009 Bulletin 2009/14**

(73) Titulaire: **THALES**
**92200 Neuilly sur Seine (FR)**

(72) Inventeurs:
• **CHESNE, Philippe**
**41100 Vendome (FR)**

• **STEIGER, Brigitte**
**41100 Meslay (FR)**

(74) Mandataire: **Collet, Alain et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**DE-B- 1 002 953     US-A- 4 247 843**
**US-B1- 6 686 851**

**Description**

L'invention concerne un procédé de gestion de l'affichage d'un compteur tournant. L'invention trouve une application avantageuse en aéronautique pour l'affichage sur une planche de bord d'un aéronef de la valeur de l'altitude et/ou de la vitesse de l'aéronef.

Plus précisément, la plupart des aéronefs sont équipés d'instruments combinés généralement utilisés en secours et affichant l'attitude de l'aéronef dans une zone centrale, la vitesse dans une zone latérale gauche et l'altitude dans une zone latérale droite.

On a utilisé des compteurs mécaniques pour afficher la vitesse et l'altitude dans les instruments combinés de secours. Un tel compteur fait tourner plusieurs roues juxtaposées autour d'un axe horizontal. Chaque roue permet d'afficher un caractère généralement numérique. Sur chaque roue est imprimé toutes les valeurs qu'un caractère peut prendre. En tournant, les roues défilent verticalement devant une fenêtre pour ne laisser apparaître que la valeur courante de la vitesse ou de l'altitude. Pour assurer une bonne lisibilité de la valeur courante, la hauteur de la fenêtre doit être suffisante pour qu'un caractère soit toujours entièrement visible dans la fenêtre quelle que soit la position de la roue. Pour répondre à ce critère, la hauteur de la fenêtre doit au moins être égale à deux fois la hauteur d'un caractère plus la hauteur de l'espacement entre deux caractères successifs.

Des afficheurs digitaux sont apparus dans les instruments combinés mais pour ne pas perturber les pilotes d'aéronef, ces nouveaux afficheurs ont conservé la même présentation d'information que dans les instruments mécaniques.

La fenêtre fait partie de l'afficheur d'un instrument de navigation sur lequel on affiche d'autres informations et on tend à réduire la taille de la fenêtre pour permettre l'affichage d'un plus grand nombre d'informations sur l'afficheur. Pour réduire la taille de la fenêtre tout en conservant une bonne lisibilité, on a tenté de conserver la hauteur des caractères et de réduire l'espacement entre caractère. On a également tenté de réduire la hauteur des caractères tout en conservant l'espacement. Ces deux réalisations n'ont pas été satisfaisantes au niveau de l'ergonomie.

L'invention vise à pallier les problèmes cités plus haut en proposant un procédé d'affichage qui permet de réduire la hauteur de la fenêtre d'un compteur tournant tout en conservant une bonne lisibilité des caractères visibles dans la fenêtre.

A cet effet, l'invention a pour objet un procédé de gestion de l'affichage d'un compteur tournant permettant de visualiser dans une fenêtre, en permanence, au moins une valeur du compteur sous forme de caractères, les valeurs défilant verticalement dans la fenêtre, une distance d, définissant un espacement entre deux caractères de deux valeurs successives, **caractérisé en ce que** l'on fait varier la distance d entre une valeur $d_{mini}$

lorsque deux valeurs successives sont visibles dans la fenêtre et une valeur $d_{maxi}$ lorsqu'une seule valeur est visible dans la fenêtre.

L'invention sera mieux comprise et d'autres avantages apparaîtront à la lecture de la description détaillée d'un mode de réalisation donné à titre d'exemple, description illustrée par le dessin joint dans lequel :

la figure 1 représente un instrument combiné de secours ;
les figures 2a et 2b représentent deux situations d'affichage pour une fenêtre de grande taille ;
les figures 3a et 3b représentent deux situations d'affichage pour une fenêtre de taille plus réduite ;
les figures 4a et 4b représentent deux situations d'affichage pour une fenêtre où un procédé conforme à l'invention est mis en oeuvre ;
la figure 5 représente un exemple de courbe montrant la variation de l'espacement entre caractères en fonction de la valeur à afficher.

Par souci de clarté, les mêmes éléments porteront les mêmes repères dans les différentes figures.

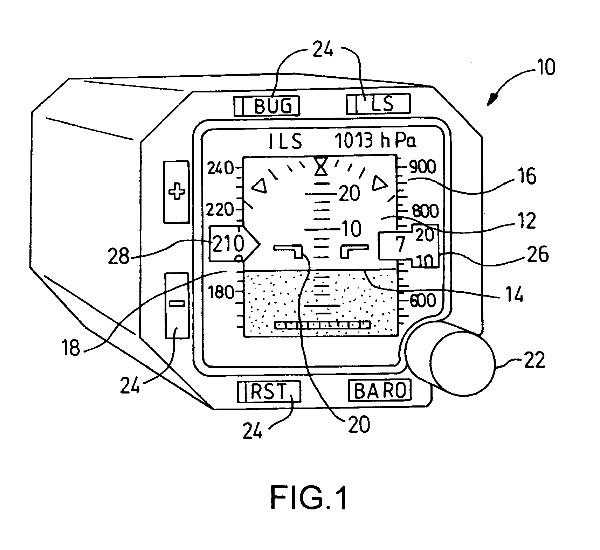

La figure 1 représente un instrument combiné de secours 10 équipant un aéronef. L'instrument 10 comporte un écran digital en couleur 12 pour l'affichage d'un horizon 14 (terre en marron au-dessous, ciel en bleu au-dessus) et de données de secours nécessaires au pilotage, à savoir principalement altitude sous forme d'une échelle graduée défilante 16 à droite, vitesse sous forme d'une autre échelle graduée défilante 18 à gauche, et un symbole 20 d'attitude de l'aéronef. L'affichage de l'horizon et des données est fait en fonction d'un calcul fait par l'instrument 10 à partir de signaux en provenance de capteurs dont certains sont extérieurs à l'instrument 10 et dont d'autres peuvent être à l'intérieur ou à l'extérieur de l'instrument 10. Les capteurs sont en général des capteurs de pression (pour la vitesse et pour l'altitude) et une unité de mesure inertielle pour l'attitude.

L'instrument 10 comporte en général un bouton de réglage 22 servant au recalage de la pression atmosphérique en fonction de données communiquées localement (par exemple fournies par les services de météorologie à proximité d'un aéroport). Il comporte d'autres boutons de commande 24 servant à divers usages (recalage d'horizon, mise en place sur l'écran de marques de plages de vitesse ou d'altitude autorisées, etc.). L'instrument comporte des circuits électroniques et des logiciels embarqués. Il fournit des informations indépendantes de celles qui sont données par les systèmes principaux d'aide à la navigation de l'aéronef.

Les échelles graduées défilantes 16 et 18 comportent chacune dans une partie centrale de l'écran 12 une loupe, respectivement 26 et 28 permettant de visualiser avec précision la valeur courante. A titre d'exemple sur la figure 1, l'altitude de l'aéronef est de 715 pieds (équivalent à environ 240 m) et sa vitesse est de 210 noeuds (équivalent à environ 390 km/h). La loupe 26 affiche dans sa partie gauche les centaines, ici le chiffre 7, et dans sa partie droite les dizaines et les unités, ici une valeur comprise entre 10 et 20. Sur la partie droite de la loupe 26, les caractères affichés défilent verticalement dans une fenêtre sous forme d'un compteur donnant des valeurs discrètes espacées de 10 pieds. Pour les dizaines et les unités, la valeur exacte de 15 est donc située entre les valeurs 10 et 20 du compteur. Le principe d'affichage dans la loupe 28 peut être semblable à celui de la loupe 26.

Par la suite on ne s'intéressera qu'à l'ergonomie de la partie droite de la loupe 26, mais il est bien entendu que l'invention peut être mise en oeuvre pour tout autre compteur tournant comme par exemple celui de la loupe 28 exprimant la vitesse de l'aéronef.

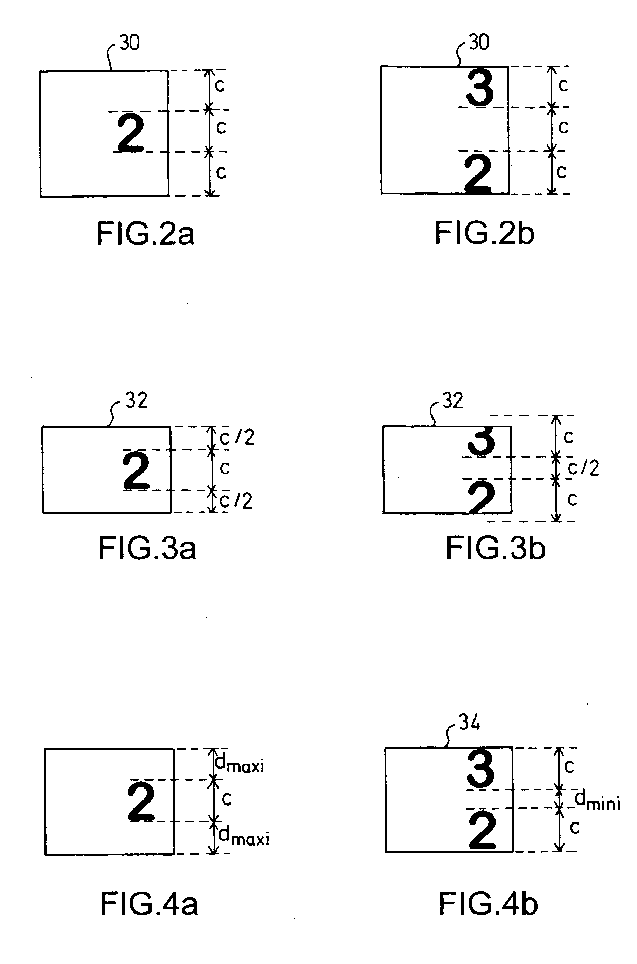

Les figures 2a et 2b représentent une même fenêtre 30 dont la hauteur est égale à trois fois la hauteur c d'un caractère. L'espacement entre deux caractères successifs est égal la hauteur c d'un caractère. Lorsqu'un caractère est centré dans la fenêtre 30, comme c'est le cas sur la figure 2a, l'affichage n'est pas surchargé, assurant ainsi une bonne ergonomie. Dans le cas de la figure 2b, où une valeur intermédiaire entre deux caractères est à afficher, la hauteur de la fenêtre 30 permet d'afficher correctement deux caractères de façon complète. Ici encore la lisibilité des caractères est correcte. Dans toutes les situations intermédiaires entre les deux cas des figures 2a et 2b , on aura toujours au moins un caractère affiché complètement. Le rapport entre la hauteur de la fenêtre 30 et la hauteur c des caractères apporte un grand confort visuel mais nécessite une fenêtre utilisant beaucoup de place sur l'écran 12.

Les figures 3a et 3b représentent une fenêtre 32 moins haute que la fenêtre 30. La hauteur de la fenêtre 32 est égale à deux fois la hauteur c d'un caractère. L'espacement entre deux caractères successifs est égal la moitié c/2 de la hauteur d'un caractère. Lorsqu'un caractère est centré dans la fenêtre 32, comme c'est le cas sur la figure 3a, l'affichage est aussi lisible que celui de la figure 2a. Néanmoins, dans le cas de la figure 3b, où une valeur intermédiaire entre deux caractères est à afficher, la hauteur de la fenêtre 32 ne permet pas d'afficher complètement deux caractères ce qui peut entraîner des problèmes d'interprétation de la valeur réelle.

Pour assurer cette lisibilité il faudrait que la hauteur de la fenêtre 32 soit égale à 2,5 fois la hauteur d'un caractère et plus généralement à deux fois la hauteur d'un caractère plus la hauteur d'un espacement entre deux caractères successifs. Néanmoins dans le cas d'un caractère centré dans une telle fenêtre, les caractères précédant et suivant apparaîtrait partiellement dans la fenêtre ce qui dégraderait l'ergonomie de l'affichage.

Les situations d'affichage décrites à l'aide des figures 2 et 3 utilisent un espacement entre caractères constant et ne permettent donc pas de définir une hauteur de fenêtre plus petite que celle de la fenêtre 30 sans dégrader l'affichage.

Une solution décrite à l'aide des figures 4a et 4b permet d'améliorer l'ergonomie de l'affichage en proposant de faire varier l'espacement entre deux caractères successifs. Cet espacement variable sera appelé d. Sur la figure 4a un caractère est centré dans une fenêtre 34 et l'espacement d est maximum et est noté $d_{maxi}$. Ceci permet de n'afficher qu'un seul caractère dans la fenêtre 34 sans qu'un utilisateur ne soit perturbé par d'autres parties de caractères pouvant également apparaître en haut ou en bas de la fenêtre 34. Sur la figure 4b on est dans une situation semblable à celle des figures 2b et 3b et on a réduit l'espacement d à une valeur minimale $d_{mini}$ pour permettre l'affichage complet de deux caractères dans la fenêtre 34.

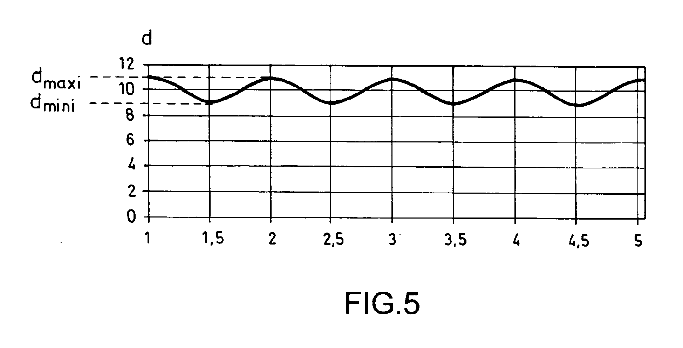

La figure 5 permet d'illustrer la variation de l'espacement d en fonction d'une valeur à afficher dans la fenêtre 34. La valeur à afficher évolue entre 1 et 5. L'espacement d varie sur une échelle graduée de façon arbitraire entre 0 et 12. Sur la figure 5, la hauteur d varie autour d'une valeur 10 entre 9 et 11. les caractères à afficher dans la fenêtre 34 ne sont que les valeurs entières entre 1 et 5. Lorsque la valeur à afficher dans la fenêtre est entière, on doit ne voir qu'un caractère dans la fenêtre 34. Lorsque la valeur à afficher dans la fenêtre est intermédiaire, on doit voir toujours au moins un caractère complet dans la fenêtre 34. Lorsque la valeur à afficher est à mi-chemin entre deux valeurs entières (1,5 ; 2,5 ; 3,5 ou 4,5), l'espacement vaut $d_{mini}$ et deux caractères apparaissent dans la fenêtre 34.

On définit une hauteur h de la fenêtre 34. Avantageusement, pour ne voir qu'un caractère lorsque la valeur à afficher dans la fenêtre est entière la distance $d_{mini}$ est définie de telle sorte que :

$$h = 2c + d_{mini}$$

et la distance $d_{maxi}$ est définie de telle sorte que :

$$h = c + 2\, d_{maxi}$$

Sur la figure 5, la distance d est représentée en ordonnée et la valeur à afficher en abscisse. La distance d varie de façon sinusoïdale entre les valeurs $d_{mini}$ et $d_{maxi}$ en fonction de l'évolution de la valeur à afficher. Cette variation permet une très bonne ergonomie. D'autres variations sont possibles tel qu'une variation linéaire ou en dent de scie entre les valeurs $d_{maxi}$ et $d_{mini}$. La variation linéaire est plus simple à mettre en oeuvre que la variation sinusoïdale.

L'instrument 10 comporte un calculateur permettant de gérer l'affichage sur l'écran digital 12. Ce calculateur peut facilement, à partir de la valeur courante du compteur à afficher, déterminer la distance d en utilisant par exemple la fonction représentée sur la figure 5.

**Revendications**

1. Procédé de gestion de l'affichage d'un compteur tournant sur un écran digital, le procédé permettant de visualiser dans une fenêtre (34), en permanence, au moins une valeur du compteur sous forme de caractères, les valeurs défilant verticalement dans la fenêtre (34), une distance d, définissant un espacement entre deux caractères de deux valeurs successives, **caractérisé en ce que** l'on fait varier la distance d entre une valeur $d_{mini}$ lorsque deux valeurs successives sont visibles dans la fenêtre (34) et une valeur $d_{maxi}$ lorsqu'une seule valeur est visible dans la fenêtre (34).

2. Procédé selon la revendication 1, **caractérisé en ce que** la distance d varie de façon linéaire entre les valeurs $d_{mini}$ et $d_{maxi}$ en fonction de l'évolution de la valeur à afficher.

3. Procédé selon la revendication 1, **caractérisé en ce que** la distance d varie de façon sinusoïdale entre les valeurs $d_{mini}$ et $d_{maxi}$ en fonction de l'évolution de la valeur à afficher.

4. Procédé selon l'une des revendications précédentes, **caractérisé en ce que** la fenêtre (34) a une hauteur h et les caractères ont une hauteur c, **en ce que** la distance $d_{mini}$ est définie de telle sorte que :

$$h = 2c + d_{mini}$$

et **en ce que** la distance $d_{maxi}$ est définie de telle sorte que :

$$h = c + 2\,d_{maxi}$$

**Claims**

1. Method for managing the display of a rotary indicator on a digital screen, the method making it possible to permanently display in a window (34) at least one value of the indicator in the form of characters, the values scrolling vertically in the window (34), a distance d defining a spacing between two characters of two successive values, **characterized in that** the distance d is varied between a value $d_{mini}$ when two successive values are visible in the window (34) and a value $d_{maxi}$ when a single value is visible in the window (34).

2. Method according to Claim 1, **characterized in that** the distance d varies linearly between the values $d_{mini}$ and $d_{maxi}$ as the value to be displayed changes.

3. Method according to Claim 1, **characterized in that** the distance d varies sinusoidally between the values $d_{mini}$ and $d_{maxi}$ as the value to be displayed changes.

4. Method according to one of the preceding claims, **characterized in that** the window (34) has a height h and the characters have a height c and **in that** the distance $d_{mini}$ is defined such that:

$$h = 2c + d_{mini}$$

and **in that** the distance $d_{maxi}$ is defined such that:

$$h = c + 2d_{maxi}$$

**Patentansprüche**

1. Verfahren zur Verwaltung der Anzeige eines Drehzählers auf einem digitalen Bildschirm, wobei das Verfahren es ermöglicht, in einem Fenster (34) permanent mindestens einen Wert des Zählers in Form von Zeichen sichtbar zu machen, wobei die Werte senkrecht im Fenster (34) durchlaufen, wobei ein Abstand d einen Zwischenraum zwischen zwei Zeichen von zwei aufeinanderfolgenden Werten definiert, **dadurch gekennzeichnet, dass** der Abstand d zwischen einem Wert $d_{mini}$, wenn zwei aufeinanderfolgende Werte im Fenster (34) sichtbar sind, und einem Wert $d_{maxi}$ verändert wird, wenn nur ein Wert im Fenster (34) sichtbar ist.

2. Verfahren nach Anspruch 1, **dadurch gekennzeichnet, dass** der Abstand d abhängig von der Entwicklung des anzuzeigenden Werts linear zwischen den Werten $d_{mini}$ und $d_{maxi}$ variiert.

3. Verfahren nach Anspruch 1, **dadurch gekennzeichnet, dass** der Abstand d abhängig von der Entwicklung des anzuzeigenden Werts sinusförmig zwischen den Werten $d_{mini}$ und $d_{maxi}$ variiert.

4. Verfahren nach einem der vorhergehenden Ansprüche, **dadurch gekennzeichnet, dass** das Fenster (34) eine Höhe h hat, und die Zeichen eine Höhe c haben, dass der Abstand $d_{mini}$ so definiert ist, dass gilt:

$$h = 2c + d_{mini}$$

und dass der Abstand $d_{maxi}$ so definiert ist, dass gilt:

$$h = c + 2d_{maxi}$$

ILS    1013 hPa

FIG.1

FIG.2a

FIG.2b

FIG.3a

FIG.3b

FIG.4a

FIG.4b

FIG.5